# EUROPÄISCHE PATENTSCHRIFT

(11) **EP 1 585 412 B1**
(45) Veröffentlichungstag und Bekanntmachung des Hinweises auf die Patenterteilung: **11.08.2010**
(21) Anmeldenummer: 03781993.5
(22) Anmeldetag: 23.12.2003
(51) Int. Cl.: A47G 19/22, B65D 47/20, F16K 15/14

(54) **VENTILANORDNUNG**
VALVE ASSEMBLY
ENSEMBLE SOUPAPE

(30) Priorität: 20.01.2003 AT 662003
(43) Veröffentlichungstag der Anmeldung: 19.10.2005
(73) Patentinhaber: Bamed AG, 8832 Wollerau (CH)
(72) Erfinder: RÖHRIG, Peter, A-1160 Wien (AT)
(74) Vertreter: Sonn & Partner Patentanwälte
(86) Internationale Anmeldenummer: PCT/AT2003/000382
(87) Internationale Veröffentlichungsnummer: WO 2004/064578

(56) Entgegenhaltungen:
- WO-A-00/48491
- WO-A-99/47029
- CH-A- 426 625
- US-A- 5 687 882
- US-A1- 2002 121 525
- US-B1- 6 305 570
- PATENT ABSTRACTS OF JAPAN Bd. 1996, Nr. 06, 28. Juni 1996 (1996-06-28) & JP 8 034452 A (KAMAYA KAGAKU KOGYO CO LTD), 6. Februar 1996 (1996-02-06)

## Beschreibung

Die Erfindung betrifft eine Ventilanordnung für ein im Wesentlichen elastisches Trink-Mundstück eines Flüssigkeitsbehälters, mit einer flexiblen Membran, die zumindest eine Ventilöffnung aufweist, und mit einem im Wesentlichen steifen Membran-Auflageelement, das zumindest eine Ventilöffnung aufweist, wobei in einer Schließstellung der Ventilanordnung die Membran auf dem Membran-Auflageelement aufliegt und die Ventilöffnung der Membran vom Membran-Auflageelement sowie die Ventilöffnung des Membran-Auflageelements von der Membran dichtend abgedeckt sind, und die Membran in der Schließstellung einwärts gewölbt ist.

Ferner betrifft die Erfindung ein Trink-Mundstück für einen Flüssigkeitsbehälter mit einer Ventilanordnung, das auf einem Deckel mit einer Öffnung zum Durchtritt von Flüssigkeit angeordnet ist.

Aus dem Stand der Technik sind bereits verschiedene Ventilanordnungen bzw. Trink-Mundstücke, insbesondere für Kinder bekannt, bei welchen in einer nicht-verwendeten Stellung automatisch ein Ausrinnen von Flüssigkeit bzw. Flüssignahrung verhindert wird, jedoch eine Ventilöffnung automatisch freigegeben wird, sofern von einem Benutzer an dem Trink-Mundstück gesaugt wird bzw. ein Druck an dem Trink-Mundstück angelegt wird.

Aus der US 2 584 359 A ist bereits ein Flaschensauger bekannt, bei dem ein Nippel mit einer Ventilöffnung in seiner nicht-verwendeten Stellung auf einem Ventilsitz aufliegt, so dass in dieser Stellung die Ventilöffnung verschlossen ist. Sofern von außen auf den Sauger ein Druck aufgebracht wird, hebt sich der Sauger von dem Ventilsitz und die Ventilöffnung wird somit freigegeben. Nachteilig ist hierbei, dass der Sauger aus einem äußerst elastischen Material gefertigt ist und demzufolge in seiner in der in einem Mund eingeführten Gebrauchsstellung sehr leicht ungewollt auf den Ventilsitz niedergedrückt wird und somit keine zuverlässige Freigabe der Ventilöffnung während des Gebrauchs gewährleistet ist.

Eine vergleichbare Anordnung ist weiters noch aus der WO 00/48491 A1 bekannt, in der ebenfalls ein Trink-Mundstück mit einer flexiblen Hüllschicht mit einer Ventilöffnung geoffenbart ist, die über einem im Wesentlichen starren Ventilsitz angeordnet ist. Auch dieses soll durch das Anlegen eines Unterdrucks beim Saugen vom Ventilsitz abheben, wobei jedoch auf Grund der Elastizität der Hüllschicht nach wie vor die Gefahr besteht, dass sie durch die Zunge während einer Trinkbewegung auf den Ventilsitz zurückgedrückt wird und somit die Ventilöffnung ungewollterweise verschlossen wird.

Ferner ist aus der WO 02/22073 A1 ein Flüssigkeitsbehälter für Kinder bekannt, der ein flexibles Mundstück aufweist, in dem ein Ventilelement nach innen verschieblich aufgenommen ist, so dass bei Druckaufbringung auf das Mundstück ein Flüssigkeitskanal freigegeben wird und in einer entspannten Stellung des Ventilelements der Flüssigkeitskanal vom Ventilelement verschlossen wird. Hierbei ist jedoch nachteilig, dass auf das harte verschieblich gelagerte innere Mundstück ein Druck aufgebracht wird und dies mitunter schädlich für die Zähne des Benutzers, insbesondere bei der Verwendung durch noch ungeübte Kinder sein kann.

In der US 6 223 956 B1 ist ein selbstschließendes Ventil zur Flüssigkeitsentnahme aus einem Behälter mit einem ersten Membranelement und einem zweiten Membranelement gezeigt, wobei das erste, obere Membranelement in einer Schließstellung nach innen gewölbt ist und das zweite, untere Membranelement in der Schließstellung nach oben gewölbt ist, so dass eine Flüssigkeitsdurchtrittsöffnung im oberen Membranelement vom unteren Membranelement in der Schließstellung abgedeckt wird. In der Offenstellung des Ventils hebt sich das obere Membranelement vom unteren Membranelement ab, so dass die Flüssigkeitsdurchtritts-öffnung freigegeben ist. Zum Druckausgleich hebt sich das untere Membranelement vom oberen Membranelement nach unten hin ab, so dass ein Lufteintritt in den Flüssigkeitsbehälter möglich ist.

Aus der US 1 972 344 A ist ein Ventil zum Verschließen einer Flüssigkeitsabgabeöffnung eines Tubenbehälters bekannt, bei dem eine flexible Membran auf einer Aufnahmeplatte gelagert ist, so dass in einer Schließstellung eine Ventilöffnung in der Membran von der Platte abgedeckt wird. In einer Offenstellung wird die Membran von der Platte gegen eine Begrenzungswand gehoben, so dass die Ventilöffnung freigegeben ist.

In der EP 296 004 A1 ist ebenfalls ein Verschluss mit einer Ventilanordnung für einen Flüssigkeitsbehälter geoffenbart, wobei eine Membran mit einer Ventilöffnung vorgesehen ist, die in der Schließstellung nach innen gewölbt ist und auf einem Stützelement aufliegt. In der Offenstellung wird die Membran lediglich von dem Stützelement zur Freigabe der Ventilöffnung abgehoben.

Aus der WO 95/26306 A1 ist eine Verschlusskappe eines Flüssigkeitsbehälters mit einem Dichtelement mit einer Ventilöffnung bekannt, wobei das Dichtelement in seiner Schließstellung eine nach innen gewölbte Form aufweist, und die Ventilöffnung von einem innenliegenden Stützelement verschlossen wird. In der Offenstellung wird das Dichtelement von dem Stützelement lediglich abgehoben.

Aus der US 2002/121525 A1 ist ein Trink-Mundstück mit einer andersartigen Ventilanordnung bekannt, bei welcher Dichtlippen in einer geschlossenen Stellung einen Öffnungsspalt abschließen.

In der US 5 687 882 A ist ein andersartiger Behälter zur Abgabe von viskosem Material (z.B. Dichtmaterial oder dgl.) mit einem flexiblen Behältergehäuse gezeigt, in dem ein Kolben verschieblich aufgenommen ist. Zudem ist ein schirmförmiger Ventilteil vorgesehen, bei dem eine Dichtlippe um einen Ventilsitz angeordnet ist. Die Dichtlippe wird durch eine Druckaufbringung auf den flexiblen Behälter bzw. ein Verschieben des Kolbens nach oben verbogen, so dass Ventilöffnungen freigegeben sind.

In der JP 08034452 A ist eine Ventilanordnung gezeigt, bei der eine schirmförmig ausgebildete Ventilplatte vorgesehen ist.

In der US 6 305 570 B1 ist eine Verschlussklappe mit einem Trink- und einem Belüftungsventil geoffenbart, bei welcher ein zentraler Zapfen mit einem vedickten Kopf vorgesehen ist, an dem eine als Klappventil ausgebildete Membran des Trinkventils dichtend anliegt.

Weiters ist aus der CH 426 625 A ein gattungsfremder Behälter aus einem elastischen Werkstoff mit selbstschließender Austrittsöffnung mit einem mehrere Durchtrittskanäle aufweisenden Einsatz bekannt, welcher eine Verschlusskappe aufweist, die bei Druckaufbringung auf den Tubenkörper unter dem Druck des durch die Durchtrittskanäle austretenden Behälterinhalts in eine Offenstellung abhebt, so dass die Austrittsöffnungen des Einsatzes freigegeben sind.

Aus der WO 99/47029 A ist noch eine Ventilanordnung bekannt, bei welcher ein Ventilkörper eine schlauchartig ausgebildete Dichtlippe aufweist, die in der Schließstellung von innen an einem Ventilsitz anliegt.

Es ist Aufgabe der Erfindung, eine Ventilanordnung für ein Trink-Mundstück der eingangs angeführten Art zu schaffen, welche zuverlässig bei einer Druckaufbringung von außen auf das Trink-Mundstück bzw. durch das Saugen eines Benutzers in ihrer eine Ventilöffnung freigebenden Offenstellung vorliegt, und somit eine Ventilanordnung zu schaffen, die eine unterbrechungsfreie Flüssigkeitsentnahme ermöglicht bzw. in einer Nicht-Gebrauchsstellung zuverlässig einen Flüssigkeitsaustritt verhindert.

Ferner ist es Aufgabe der Erfindung, ein Trink-Mundstück mit den vorstehend genannten Eigenschaften zu schaffen.

Dies wird bei der Ventilanordnung der eingangs angeführten Art erfindungsgemäß dadurch erzielt, dass bei Druckaufbringung von außen auf das Trink-Mundstück bzw. durch das Anlegen eines Unterdrucks auf der vom Membran-Auflageelement abgewandten Seite der Membran die Membran in einer umgeschnappten, auswärts gewölbten Offenstellung vorliegt, in welcher die Ventilöffnung der Membran und des Membran-Auflageelements freigegeben sind.

Durch die Einwärtswölbung der Membran in ihrer Schließstellung bzw. durch das Umschnappen der Membran in eine auswärts gewölbte Offenstellung bei Anlegen eines Unterdrucks und/oder Druckaufbringung von außen auf das Trink-Mundstück befindet sich die Membran in ihrer Offenstellung während des Saugvorgangs in einer vergleichsweise stabilen Position, in welcher die Ventilöffnung der Membran und des Membran-Auflageelements zuverlässig freigegeben sind, so dass auch durch geringfügiges ungewolltes Druckaufbringen auf die Membran nicht sofort die Ventilöffnung der Membran wieder verschlossen wird. Demzufolge ergibt sich eine besonders einfach zu bedienende und insbesondere eine zuverlässige Flüssigkeitsentnahme ermöglichende Ventilanordnung, die auch von Kindern, die mit Umgang mit einem elastischen Trink-Mundstück noch nicht geübt sind, problemlos eingesetzt werden kann.

Wenn die Membran in ihrer Schließstellung und Offenstellung jeweils im Wesentlichen konisch ist, ergibt sich eine vergleichsweise stabile Position der Membran, wobei durch eine Druckaufbringung auf das Trink-Mundstück sowie das Anlegen eines Unterdrucks auf einfache Weise ein Umschnappen der konischen Membran in ihre Offenstellung erzielt wird.

Um zuverlässig ein Abdichten zwischen den Ventilöffnungen in der Membran und in dem Membran-Auflageelement in der Schließstellung der ventilanordnung zu erzielen, ist es von Vorteil, wenn das Membran-Auflageelement eine im Wesentlichen der einwärts gewölbten Form der Membran in ihrer Schließstellung entsprechende Ventilsitzfläche aufweist.

Wenn das Trink-Mundstück eine Rastnut zur Aufnahme des als Rastkörper ausgebildeten Membran-Auflageelements aufweist, ist zuverlässig die Position des Membran-Auflageelements in dem Trink-Mundstück festgelegt und es können ungewollte Verschiebungen relativ zur Membran, die gegebenenfalls zu Undichtheiten in der Schließstellung führen könnten, vermieden werden.

Weiters ist es günstig, wenn zur Positionierung des Membran-Auflageelements in dem Trink-Mundstück das Membran-Auflageelement über einen Steg mit einem Befestigungsring verbunden ist.

Für einen hohen Benutzerkomfort bei Verwendung des Trink-Mundstücks und zudem, um eine bestimmte Ausrichtung des Trink-Mundstücks im Mund bei der Benutzung zu erzielen, ist es von Vorteil, wenn das Trink-Mundstück in Draufsicht im Wesentlichen oval ausgebildet ist. Selbstverständlich kann das Trink-Mundstück jedoch auch jede andere beliebige Umrissform aufweisen, wobei insbesonde jene Formen günstig sind, die eine bestimmte Ausrichtung des Trink-Mundstücks bei der Benutzung bewirken.

Wenn der Steg zur Befestigung des Membran-Auflageelementes plattenförmig ausgebildet ist, wobei sich die von dem plattenförmigen Steg definierte Ebene in Draufsicht in Richtung der längeren Achse des Trink-Mundstücks erstreckt, wird ein Zusammenbeißen des weichen Trink-Mundstücks ermöglicht, was wiederum das Trinken erleichtert. Zudem kommen die Zähne des Benutzers im Falle eines Sturzes lediglich mit dem weichen Trink-Mundstück in Verbindung, wodurch Verletzungen vermieden werden können. Zudem weist der plattenförmige Steg in Richtung der kürzeren Achse des Trink-Mundstücks durch seine plattenförmige Ausgestaltung ebenfalls eine gewisse Flexibilität auf, wodurch sich das Verletzungsrisiko insbesondere im Falle eines Sturzes weiter verringert.

Um zuverlässig den Durchtritt von Flüssigkeit bzw. Flüssignahrung durch die Membran in ihrer Offenstellung zu gewährleisten ist es von Vorteil, wenn die Membran mehrere entlang einer Kreislinie angeordnete Ventilöffnungen aufweist. Im Zusammenhang hiermit ist es zudem von Vorteil, wenn das Membran-Auflageelement eine im Wesentlichen mittige Ventilöffnung aufweist.

Um zu verhindern, dass die Membran ungewollterweise beschädigt wird bzw. um einen Kontakt der Zunge des Benutzers mit der Membran in ihrer umgeschnappten Offenstellung zu vermeiden, ist es von Vorteil, wenn sich das Mundstück als Trinkschnabel über die Membran hinaus erstreckt, wobei ein erhöhter Trinkschnabel-Rand als Membranschutz und Distanzelement gebildet ist.

Zur Erzielung des gewünschten, relativ weichen Trink-Mundstücks, das unter Druckaufbringung senkrecht zu seiner Längserstreckungsrichtung nachgibt, ist es günstig, wenn das Trink-Mundstück aus einem elastischen Material, insbesondere einem thermoplastischen Elastomer (TPE), besteht. Ferner ist es von Vorteil, wenn das Membran-Auflageelement aus Polypropylen (PP) besteht, da somit zuverlässig ein Verschließen der Ventil-Anordnung in der nach innen gewölbten Schließstellung der Membran erzielt werden kann.

Das Trink-Mundstück der eingangs angeführten Art lässt sich auf besonders einfache Weise herstellen, wenn das bevorzugt aus einem thermoplastischen Elastomer (TPE) bestehende, weiche Trink-Mundstück mit dem bevorzugt aus Polypropylen (PP) bestehenden, harten Deckel in einem Mehrkomponenten-Spritzguss-Verfahren einstückig hergestellt ist. Selbstverständlich können die Membran und das Trink-Münstsück jedoch auch mehrteilig ausgeführt sein, um einen einfachen Austausch der Membran zu ermöglichen.

Für eine zuverlässige Luftzufuhr in das Innere eines Flüssigkeitsbehälters, auf welchem der Deckel mit dem Trink-Mundstück aufgesetzt ist, wobei der Deckel ein eine Ringmembran aufweisendes Luftventil mit zumindest einer Luftdurchtrittsöffnung aufweist, ist es von Vorteil, wenn an der Deckelinnenseite ein Aufnahmeelement mit einer umlaufenden, zur Deckelinnenseite offenen Nut befestigt ist, welches Aufnahmeelement zumindest eine mit der Luftdurchtrittsöffnung des Deckels in Verbindung stehende Lufteintrittsöffnung aufweist, die in der Nut mündet, wobei in der Nut ein Ring einsetzbar bzw. eingesetzt ist und durch die Vorspannung zumindest einer Nutwand, die als Ringmembran ausgebildet ist, bei gleichen Drücken beidseits der Lufteintrittsöffnung sowie bei einem Überdruck auf der Deckelinnenseite die Lufteintrittsöffnung abgedichtet ist und bei einem Unterdruck auf der Deckelinnenseite die Lufteintrittsöffnung freigegeben ist. Hierdurch wird ein konstruktiv einfaches Luftventil geschaffen, durch welches auf Grund der Vorspannung der Ringmembran zudem kein vollkommener Druckausgleich erfolgt, so dass in dem Flüssigkeitsbehälter, auf den der Deckel aufgesetzt wird, ein gewisses Restvakuum verbleibt, das wiederum zu einem zuverlässigen dichten Abschluss der als Trinkventil vorgesehenen Ventilanordnung sowie des Luftventils im nicht-gebrauchten Zustand führt.

Für eine gute Dichtwirkung der im nicht-gebrauchten Zustand am Ring anliegenden Ringmembran, ist es von Vorteil, wenn der in der eingesetzten Stellung des Rings der Lufteintrittsöffnung des Aufnahmeelements zugewandte Endbereich des Rings im Querschnitt im Wesentlichen konisch ausgebildet ist.

Wenn der in der eingesetzten Stellung des Rings der Lufteintrittsöffnung des Aufnahmeelements zugewandte Endbereich des Rings zumindest eine Aussparung aufweist, die in der eingesetzten Stellung des Rings fluchtend mit der Luftdurchtritts- bzw. Lufteintrittsöffnung angeordnet ist, ist vorteilhafterweise ein ungehinderter Lufteintritt zuverlässig gewährleistet.

Wenn der Ring im Aufnahmeelement mittels einer Schnappverbindung befestigbar bzw. befestigt ist, ergibt sich eine konstruktiv besonders einfache, kostengünstig herzustellende Verbindung zwischen dem Ring und dem Aufnahmeelement.

Um die innere Nutwand als Ringmembran ausbilden zu können, ist es günstig, wenn der Ring an seiner Außenseite eine umlaufende Wulst zum Einschnappen in der Nut des Aufnahmeelements aufweist. Dies ist insbesondere von Vorteil, da somit die innere Nutwand als Ringmembran ausgebildet sein kann, und demzufolge die durch das Luftventil eintretende Luft direkt ins Innere des Flüssigkeitsbehälters geleitet wird.

Wenn die Ringmembran zum Festlegen der Vorspannung der Ringmembran zumindest eine Dünnstelle aufweist, kann durch die Größe, die Anzahl sowie die Wandstärke der Dünnstellen das im Flüssigkeitsbehälter in der nicht-benutzten Stellung verbleibende Restvakuum auf einfache Weise festgelegt werden.

Um den Befestigungsring für den Steg des Membran-Auflageelements der Ventilanordnung zugleich mit der Zusammenstellung des Luftventils zu befestigen, ist es von Vorteil, wenn der sich in Richtung der Deckel-Öffnung erstreckende Befestigungsring über einen sich nach innen erstreckenden Verbindungsflansch mit dem Ring verbunden ist.

Wenn im Verbindungsflansch zumindest eine Lüftungsöffnung vorgesehen ist, kann durch die Luftdurchtrittsöffnung im Deckel und durch die Lufteintrittsöffnung im Aufnahmeelement eingetretene Luft ungehindert in das Innere eines Flüssigkeitsbehälters, auf dem der Deckel aufgesetzt wird, eintreten.

Um diesen Lufteintritt möglichst ungehindert zuzulassen, ist es von Vorteil, wenn die Lüftungsöffnung des Verbindungsflansches in der eingesetzten Stellung des Rings benachbart der inneren, als Ringmembran ausgeführten Nutwand angeordnet ist.

Die Erfindung wird nachstehend anhand von einem in der Zeichnung dargestellten bevorzugten Ausführungsbeispiel, auf das sie jedoch nicht beschränkt sein soll, noch weiter erläutert. Im Einzelnen zeigen:
Fig.1 eine auseinandergezogene Ansicht eines Trink-Mundstücks mit einem Trink- und einem Luftventil;
Fig.2 einen Querschnitt des Trink-Mundstücks gemäß Fig. 1 in seiner zusammengesetzten Stellung;
Fig.3 eine perspektivische Ansicht des Trink-Mundstücks gemäß Fig.2;
Fig.4 im Detail einen Schnitt des Endabschnitts des Trink-Mundstücks mit einer Membran in ihrer Schließstellung;
Fig.5 im Detail einen Schnitt des Endabschnitts des Trink-mundstücks gemäß Fig.4, jedoch mit der Membran in ihrer Offenstellung;
Fig.6 im Detail einen Schnitt des Luftventils, mit einer Ringmembran in einer Schließstellung;
Fig.7 einen Schnitt gemäß Fig. 6, jedoch mit der Ringmembran in einer Offenstellung;
Fig.8 eine Draufsicht auf den Deckel mit dem im Querschnitt ovalen Trink-Mundstück; und
Fig. 9 eine Draufsicht auf den Deckel gemäß Fig. 8 mit einem Schnitt gemäß der Linie IX-IX in Fig. 2.

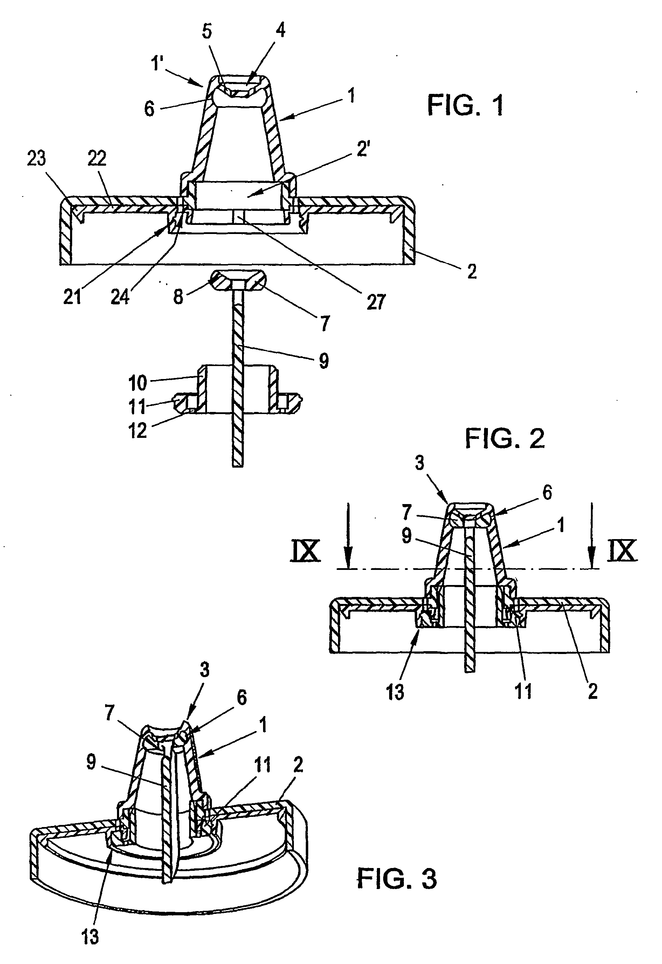

In Fig.1 ist das aus einem thermoplastischen Elastomer bestehende weiche Trink-Mundstück 1 gezeigt, das auf einem Deckel 2, der aus einem harten Kunststoffmaterial besteht, beispielsweise Polypropylen, aufgebracht ist, wobei das an eine bei-spielsweise mittige Deckel-Öffnung 2' anschließende Trink-Mundstück 1 und der Deckel 2 mittels eines 2-Komponenten-Spritzguss-Verfahrens einstückig hergestellt sind. Im oberen Endabschnitt 1' des Trink-Mundstücks 1 ist als Trinkventil eine Ventilanordnung 3 (s. Fig. 2 und 3) mit einer flexiblen Membran 4 vorgesehen, die mit dem Trink-Mundstück 1 einstückig ausgebildet ist. Selbstverständlich können die Membran 4 und das Trink-Mundstück 1 jedoch auch mehrteilig ausgeführt sein, um einen einfachen Austausch der Membran zu ermöglichen.

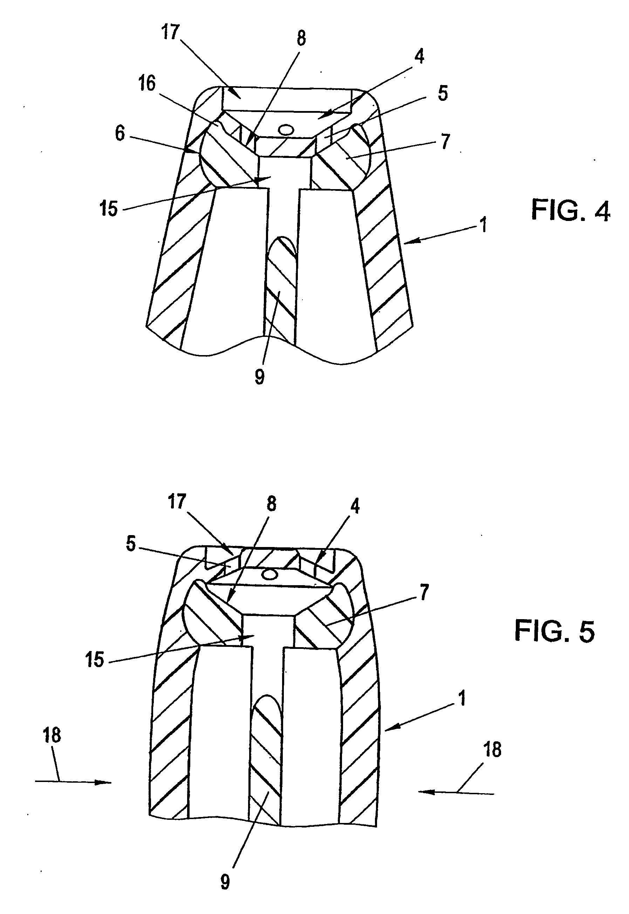

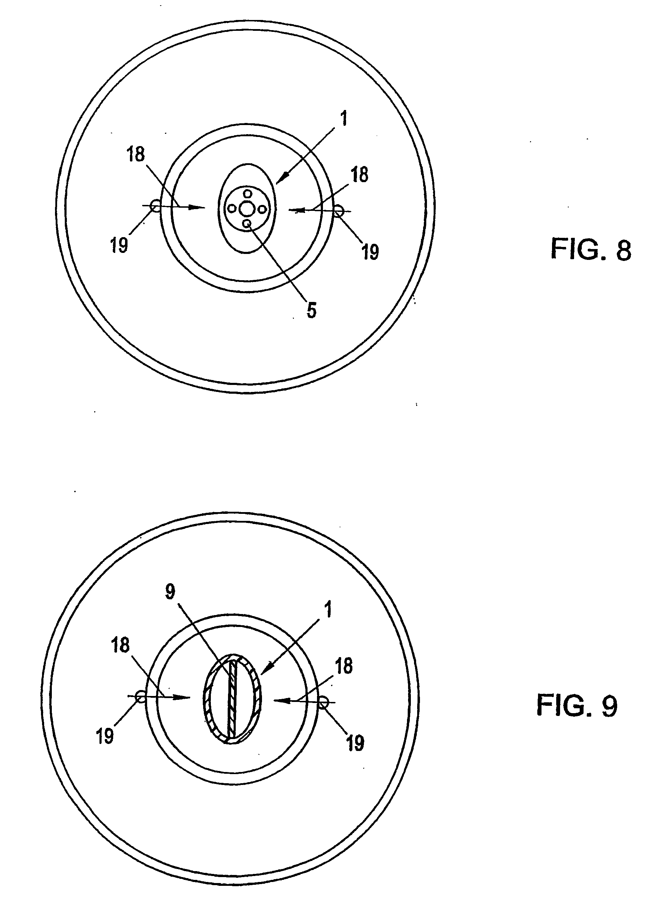

Die Membran 4 weist in der in Fig.1 gezeigten entspannten Schließstellung eine nach innen gewölbte Konusform auf, wobei in der Mantelfläche vier entlang einer Kreislinie angeordnete Ventilöffnungen 5 (vgl. auch Fig.4 und 8) vorgesehen sind. Anschließend an die Membran 5 ist im Inneren des Trink-Mundstücks 1 eine Rastnut 6 zur Aufnahme eines Membran-Auflageelements 7 vorgesehen. Das Membran-Auflageelement 7 ist im Wesentlichen plattenförmig ausgebildet und mit einer oberen entsprechend der Konusform der Membran 4 nach innen gewölbten Ventilsitzfläche 8 versehen.

Zur Befestigung des Membran-Auflageelements 7 mit dem Deckel 2 ist das Membran-Auflageelement 7 über einen plattenförmigen Steg 9 mit einem Befestigungsring 10 verbunden.

Wie insbesondere aus den Figuren 2 und 3 hervorgeht, in welchen das Membran-Aufnahmeelement 7 in der Rastnut 6 des Trink-Mundstücks 1 aufgenommenen Stellung gezeigt ist, erfolgt durch das Einsetzen eines Rings 11, der über einen Verbindungsflansch 12 mit dem Befestigungsring 10 des plattenförmigen Steges 9 verbunden ist, zugleich die Bildung eines Luftventils 13 und die Befestigung des Membran-Aufnahmeelements 7 im Trink-Mundstück 1 zur Bildung des Trinkventils 3.

Die Funktionsweise der als Trinkventil ausgestalteten Ventilanordnung 3 mit der Membran 4 und dem Membran-Auflageelement 8 geht insbesondere aus den in den Figuren 4 und 5 gezeigten Detailansichten hervor, wobei die Membran 4 in Fig.4 in ihrer einwärts gewölbten Schließstellung und in Fig.5 in ihrer auswärts gewölbten Offenstellung gezeigt ist.

Wie in Fig.4 ersichtlich, liegen die Ventilöffnungen 5 der Membran 4 in ihrer Schließstellung auf der vollflächigen Ventilsitzfläche 8 des Membran-Auflageelements 7 auf und eine mittige Ventilöffnung 15 des Auflageelements 7 wird von der Stirnfläche der konischen Membran 4 abgedeckt, so dass ein Flüssigkeitsdurchtritt in der Schließstellung der Membran 4 verhindert wird.

Ferner ist in Fig.4 im Detail die Rastnut 6 des elastischen Trink-Mundstücks 1 ersichtlich, in dem das Membran-Auflageelement 7 mittels einer Schnappverbindung aufgenommen wird. An die Rastnut 6 schließt direkt die Membran 4 an, wobei durch eine ringförmige Rastzunge 16 des Membran-Auflageelements 7 eine Art Kippfläche zum Umschnappen der Membran 4 von ihrer einwärts gewölbten Schließstellung in ihre auswärts gewölbte in Fig.5 gezeigte Offenstellung gebildet wird.

Ferner ist in Fig.4 noch ersichtlich, dass das Trink-Mundstück 1 einen sich über die Membran 4 hinaus erstreckenden, erhöhten Rand 17 aufweist, der als Membranschutz dient und zugleich auch als Distanzelement ausgebildet ist, so dass sich die Membran 4 auch in ihrer auswärts gewölbten Offenstellung nicht über den Rand 17 hinaus erstreckt (vgl. Fig.5). Somit kann nur erschwert Zugang zu der Membran 4 erlangt werden, so dass ein ungewolltes Zurückschnappen der Membran weiter erschwert wird.

In Fig.5 ist die Membran 4 unter einer von außen senkrecht zur Längserstreckung des Trink-Mundstücks 1 in Pfeilrichtung 18 aufgebrachten Druckkraft, welche sich automatisch durch den Anpressdruck der Lippen beim Trinken bzw. Saugen ergibt, bzw. unter einem bei einer Trink- bzw. Saugbewegung angelegten Unterdruck an das Trinkmundstück 1 gezeigt. Die Membran 4 schnappt hierbei in ihre auswärts gewölbte Offenstellung um, in welcher die Ventilöffnung 15 im Membran-Auflageelement 7 sowie die entlang einer Kreislinie in der Mantelfläche der konischen Membran 4 verteilten Ventilöffnungen 5 der Membran 4 freigegeben sind und somit Flüssigkeit bzw. Flüssignahrung über das Trink-Mundstück 1 entnommen werden kann. Sobald der Unterdruck an der Außenseite der Membran 4 nicht mehr angelegt wird bzw. die in Pfeilrichtung 18 wirkende Kraft beim Absetzen des Trink-Mundstücks 1 von den Lippen nicht mehr wirkt, schnappt die Membran automatisch wieder in ihre in Fig.4 gezeigte Schließstellung um, so dass aus einem Flüssigkeitsbehälter auf einfache Weise Flüssigkeit bzw. Flüssignahrung, wie beispielsweise Milchnahrung, entnommen werden kann und zugleich eine tropffreie, gut abdichtende Ventilanordnung in einer Nicht-Gebrauchsstellung gegeben ist.

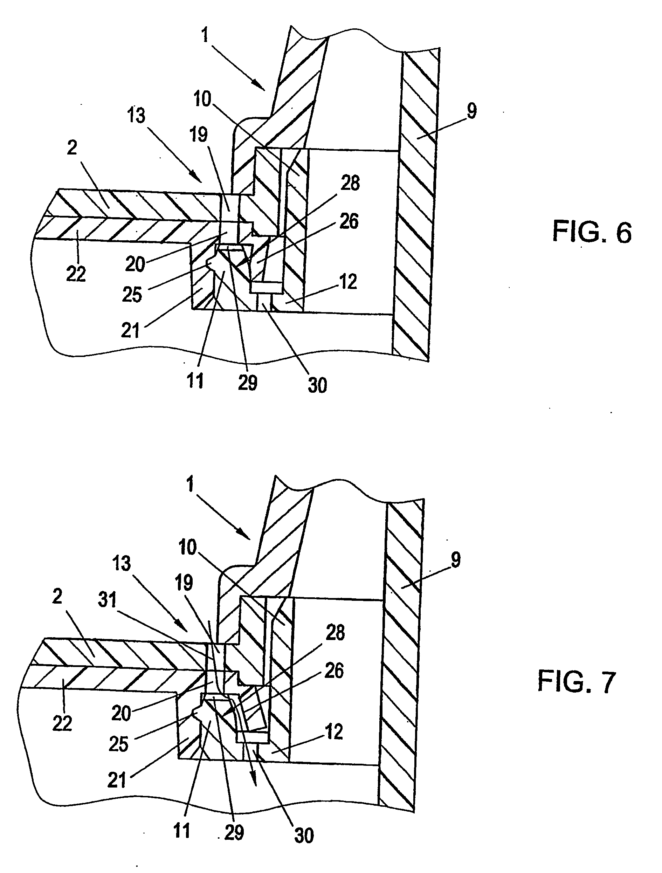

In den Figuren 6 und 7 ist im Detail das auch in den Figuren 2 und 3 ersichtliche Luftventil 13 dargestellt, das Luftdurchtrittsöffnungen 19 im Deckel 2 und damit in Verbindung stehende Lufteintrittsöffnungen 20 in einem Aufnahmeelement 21 (vgl. auch Fig.1) aufweist, das über einen Flansch 22 mit dem Deckel 2 in einem Zweikomponenten-Spritzguss-Verfahren einstückig hergestellt ist. Der Flansch 22 wird zudem von einem Dichtungsring 23 (vgl. Fig.1) umgeben der für einen dichten Abschluss des schürzenartigen Deckels 2 mit dem Flaschenhals eines Flüssigkeitsbehälters vorgesehen ist, wobei der Deckel 2 entweder mittels einer Schraub- oder Schnappverbindung auf dem Flaschenhals befestigt wird.

Das ringförmige Aufnahmeelement 21 weist eine Nut 24 auf (vgl. Fig.1), in die der Ring 11 eingesetzt ist. Der Ring 11 weist an seinem Außenumfang eine Wulst 25 auf, durch welche der Ring 11 in der Nut 24 des Aufnahmeelements 21 mittels einer Schnappverbindung befestigt werden kann.

In der in Fig. 6 gezeigten Schließstellung des Luftventils 13 liegt die als Ringmembran ausgebildete innere Nutwand 26 des Aufnahmeelements 21 durch ihre Vorspannung an dem in der Nut 24 eingesetzten Ring 11 dichtend an, wobei die innere Nutwand 26 zur Festlegung ihrer Vorspannung und somit in Folge zur Bestimmung des in der Nicht-Gebrauchsstellung einer Trinkflasche vorliegenden Restvakuums Dünnstellen 27 (vgl. Fig.1) aufweist.

Sofern an dem Trink-Mundstück 1 jedoch ein Unterdruck durch eine Trink- bzw. Saugbewegung eines Benutzers angelegt wird, hebt die Ringmembran 26 geringfügig von einem als Dichtkonus 28 ausgebildeten Endbereich des Rings 11 ab, so dass Luft von außen durch die Luftdurchtrittsöffnungen 19 im Deckel 2, die Lufteintrittsöffnungen 20 im Aufnahmeelement 21 und mit den Luftdurchtrittsöffnungen 19 bzw. den Lufteintrittsöffnungen 20 fluchtend angeordnete Aussparungen 29 im Dichtkonus 28 eintreten kann (vgl. Fig. 7).

Ferner sind im Verbindungsflansch 12, über den der Ring 11 mit dem Befestigungsring 10 des Stegs 9 zur Befestigung des Membran-Auflageelements 8 (s. Fig.1) verbunden ist, Lüftungsöffnungen 30 vorgesehen, die in der eingesetzten Position des Rings 11 fluchtend mit Luftdurchtrittsöffnungen 19 bzw. den Lufteintrittsöffnungen 20 angeordnet, so dass ein ungehinderter Lufteintritt in Richtung eines Pfeils 31 in einen Flüssigkeitsbehälter ermöglicht wird.

Da durch das Einsetzen des Rings 11 in die Nut 24 zugleich das Membran-Auflageelement 7 im Trink-Mundstück 1 angebracht wird, kann bei Verwendung des Deckels 2 durch die Kombination von dem Luftventil 13 und dem Trinkventil 3 ein weitestgehend tropffreier Flüssigkeitsbehälter erzielt werden, der insbesondere als Ernährungshilfe zum Verabreichen von Milchnahrung geeignet ist.

In den Figuren 8 und 9 ist insbesondere ersichtlich, dass das Trink-Mundstück 1 in Draufsicht oval ausgebildet ist, so dass das Trink-Mundstück 1 beim Benutzen nur in einer bestimmten Ausrichtung, nämlich in seiner quer-ovalen Ausrichtung im Mund aufgenommen werden kann.

Wie insbesondere Fig. 9 zu entnehmen ist, ist in der im Mund aufgenommenen Stellung der Steg 9 des Membran-Auflageelements 7 zwischen den Zähnen flach orientiert, so dass ein Zusammenbeißen bzw. -drücken des weichen Trink-Mundstücks 1 in Pfeilrichtung 18 möglich ist, wodurch das Umschnappen der Membran 4 in ihre in Fig.5 gezeigte Offenstellung begünstigt wird. Des Weiteren sind die Zähne insbesondere von Kindern auch im Falle eines Sturzes weitgehend durch das weiche Trink-Mundstück 1 geschützt, da kein direkter Kontakt mit dem wesentlich steiferen Steg 9 auftritt. Zudem ist das gesamte Trink-Mundstück 1 inklusive dem Steg 9 auch in Richtung seiner kleineren Achse flexibel, so dass ein Nachgeben bei ungewollten stoßartigen Bewegungen möglich ist. Des Weiteren kann das steifere Membran-Auflageelement 7 samt Steg 9, Befestigungsring 10 und Ring 11 bei einem Sturz auch nach innen gedrückt werden, da dieses lediglich durch die Schnappverbindung in der Rastnut 6 des Trink-Mundstücks 1 sowie der Schnappverbindung in der Nut 24 des Aufnahmeelements 21 eingesetzt ist, so dass sich das Verletzungsrisiko bei einem Sturz weiter verringert.

## Patentansprüche

1. Ventilanordnung (3) für ein im Wesentlichen elastisches Trink-Mundstück (1) eines Flüssigkeitsbehälters, mit einer flexiblen Membran (4), die zumindest eine Ventilöffnung (5) aufweist, und mit einem im Wesentlichen steifen Membran-Auflageelement (7), das zumindest eine Ventilöffnung (15) aufweist, wobei in einer Schließstellung der Ventilanordnung (3) die Membran (4) auf dem Membran-Auflageelement (7) aufliegt und die Ventilöffnung (5) der Membran (4) vom Membran-Auflageelement (7) sowie die Ventilöffnung (5) des Membran-Auflageelements (7) von der Membran (4) dichtend abgedeckt sind, und die Membran (4) in der Schließstellung einwärts gewölbt ist, **dadurch gekennzeichnet, dass** bei Druckaufbringung von außen auf das Trink-Mundstück (1) bzw. durch das Anlegen eines Unterdrucks auf der vom Membran-Auflageelement (7) abgewandten Seite der Membran (4) die Membran (4) in einer umgeschnappten, auswärts gewölbten Offenstellung vorliegt, in welcher die Ventilöffnungen (5, 15) der Membran (4) und des Membran-Auflageelements (7) freigegeben sind.

2. Ventilanordnung nach Anspruch 1, **dadurch gekennzeichnet, dass** die Membran (4) in ihrer Schließstellung und Offenstellung jeweils im Wesentlichen konisch ist.

3. Ventilanordnung nach Anspruch 1 oder 2, **dadurch gekennzeichnet, dass** das Membran-Auflageelement (7) eine im Wesentlichen der einwärts gewölbten Form der Membran (4) in ihrer Schließstellung entsprechende Ventilsitzfläche (8) aufweist.

4. Ventilanordnung nach einem der Ansprüche 1 bis 3, **dadurch gekennzeichnet, dass** das Trink-Mundstück (1) eine Rastnut (6) zur Aufnahme des als Rastkörper ausgebildeten Membran-Auflageelements (7) aufweist.

5. Ventilanordnung nach einem der Ansprüche 1 bis 4, **dadurch gekennzeichnet, dass** das Membran-Auflageelement (7) über einen Steg (9) mit einem Befestigungsring (10) verbunden ist.

6. Ventilanordnung nach einem der Ansprüche 1 bis 5, **dadurch gekennzeichnet, dass** das Trink-Mundstück (1) in Draufsicht im Wesentlichen oval ausgebildet ist.

7. Ventilanordnung nach Anspruch 6 und 5, **dadurch gekennzeichnet, dass** der Steg (9) zur Befestigung des Membran-Auflageelementes (7) plattenförmig ausgebildet ist, wobei sich die von dem plattenförmigen Steg (9) definierte Ebene in Draufsicht in Richtung der längeren Achse des Trink-Mundstücks (1) erstreckt.

8. Ventilanordnung nach einem der Ansprüche 1 bis 7, **dadurch gekennzeichnet, dass** die Membran (4) mehrere entlang einer Kreislinie angeordnete Ventilöffnungen (5) aufweist.

9. Ventilanordnung nach einem der Ansprüche 1 bis 8, **dadurch gekennzeichnet, dass** das Membran-Auflageelement (7) eine im Wesentlichen mittige Ventilöffnung (15) aufweist.

10. Ventilanordnung nach einem der Ansprüche 1 bis 9, **dadurch gekennzeichnet, dass** sich das Mundstück (1) als Trinkschnabel über die Membran (4) hinaus erstreckt, wobei ein erhöhter Trinkschnabel-Rand (17) als Membranschutz und Distanzelement gebildet ist.

11. Ventilanordnung nach einem der Ansprüche 1 bis 10, **dadurch gekennzeichnet, dass** das Trink-Mundstück (4) aus einem elastischen Material, insbesondere einem thermoplastischen Elastomer (TPE), besteht.

12. Ventilanordnung nach einem der Ansprüche 1 bis 11, **dadurch gekennzeichnet, dass** das Membran-Auflageelement (7) aus Polypropylen (PP) besteht.

13. Trink-Mundstück (1) für einen Flüssigkeitsbehälter, mit einer Ventilanordnung (3) nach einem der Ansprüche 1 bis 10, das auf einem Deckel (2) mit einer Öffnung zum Durchtritt von Flüssigkeit anordenbar ist.

14. Trink-Mundstück nach Anspruch 13, **dadurch gekennzeichnet, dass** das bevorzugt aus einem thermoplastischen Elastomer (TPE) bestehende, weiche Trink-Mundstück (1) mit dem bevorzugt aus Polypropylen (PP) bestehenden, harten Deckel (2) in einem Mehrkomponenten-Spritzguss-Verfahren einstückig hergestellt ist.

15. Trink-Mundstück nach Anspruch 13 oder 14, wobei der Deckel (2) ein eine Ringmembran aufweisendes Luftventil (13) mit zumindest einer Luftdurchtrittsöffnung (19) aufweist, **dadurch gekennzeichnet, dass** an der Deckelinnenseite ein Aufnahmeelement (21) mit einer umlaufenden, zur Deckelinnenseite offenen Nut (24) befestigt ist, welches Aufnahmeelement (21) zumindest eine mit der Luftdurchtrittsöffnung (19) des Deckels (2) in Verbindung stehende Lufteintrittsöffnung (20) aufweist, die in der Nut (24) mündet, wobei in der Nut (24) ein Ring (11) einsetzbar bzw. eingesetzt ist und durch die Vorspannung zumindest einer Nutwand (26), die als Ringmembran ausgebildet ist, bei gleichen Drücken beidseits der Lufteintrittsöffnung (20) sowie bei einem Überdruck auf der Deckelinnenseite die Lufteintrittsöffnung (20) abgedichtet ist und bei einem Unterdruck auf der Deckelinnenseite die Lufteintrittsöffnung (20) freigegeben ist.

16. Trink-Mundstück nach Anspruch 15, **dadurch gekennzeichnet, dass** der in der eingesetzten Stellung des Rings (11) der Lufteintrittsöffnung (20) des Aufnahmeelements (21) zugewandte Endbereich (28) des Rings (11) im Querschnitt im Wesentlichen konisch ausgebildet ist.

17. Trink-Mundstück nach Anspruch 15 oder 16, **dadurch gekennzeichnet, dass** der in der eingesetzten Stellung des Rings (11) der Lufteintrittsöffnung (20) des Aufnahmeelements (21) zugewandte Endbereich (28) des Rings (25) zumindest eine Aussparung (29) aufweist.

18. Trink-Mundstück nach einem der Ansprüche 15 bis 17, **dadurch gekennzeichnet, dass** der Ring (11) im Aufnahmeelement (21) mittels einer Schnappverbindung befestigbar bzw. befestigt ist.

19. Trink-Mundstück nach Anspruch 18, **dadurch gekennzeichnet, dass** der Ring (11) an seiner Außenseite eine umlaufende Wulst (25) zum Einschnappen in der Nut (24) des Aufnahmeelements (21) aufweist.

20. Trink-Mundstück nach einem der.Ansprüche 15 bis 19, **dadurch gekennzeichnet, dass** die innere Nutwand (26) als Ringmembran ausgebildet ist.

21. Trink-Mundstück nach einem der Ansprüche 15 bis 20, **dadurch gekennzeichnet, dass** die Ringmembran (26) zum Festlegen der Vorspannung der Ringmembran zumindest eine Dünnstelle (27) aufweist.

22. Trink-Mundstück nach einem der Ansprüche 15 bis 21, **dadurch gekennzeichnet, dass** der sich in Richtung der Deckel-Öffnung (2') erstreckende Befestigungsring (10) über einen sich nach innen erstreckenden Verbindungsflansch (12) mit dem Ring (11) verbunden ist.

23. Trink-Mundstück nach Anspruch 22, **dadurch gekennzeichnet, dass** im Verbindungsflansch (12) zumindest eine Lüftungsöffnung (30) vorgesehen ist.

24. Trink-Mundstück nach Anspruch 23, **dadurch gekennzeichnet, dass** die Lüftungsöffnung (30) des Verbindungsflansches (29) in der eingesetzten Stellung des Rings (11) benachbart der inneren, als Ringmembran ausgeführten Nutwand (26) angeordnet ist.

## Claims

1. A valve assembly (3) for a substantially elastic drinking mouthpiece (1) of a liquid contained, which includes a flexible membrane (4) having at least one valve opening (5) and a substantially rigid membrane supporting element (7) having at least one valve opening (15), wherein, with the valve assembly (3) being in a closed position, the membrane (4) rests on the membrane supporting element (7) and the valve opening (5) of the membrane (4) is sealingly covered by the membrane supporting element (7) and the valve opening (5) of the membrane supporting element (7) is sealingly covered by the membrane (4), the membrane (4) being inwardly curved in said closed position, **characterized in that**, during the external application of pressure onto the drinking mouthpiece (1) and/or the application of an underpressure on the side of the membrane (4) facing away from the membrane supporting element (7), the membrane (4) is in a snapped over, outwardly curved open position in which the valve openings (5, 15) of the membrane (4) and of the membrane supporting element (7) are released.

2. A valve assembly according to claim 1, **characterized in that** the membrane (4) is substantially conical in its closed and open positions respectively.

3. A valve assembly according to claim 1 or 2, **characterized in that** the membrane supporting element (7) has a valve seat surface (8) substantially corresponding to the inwardly curved shape of the membrane (4) in its closed position.

4. A valve assembly according to any one of claims 1 to 3, **characterized in that** the drinking mouthpiece (1) has a detent groove (6) to receive the membrane supporting element (7) configured as a detent body.

5. A valve assembly according to any one of claims 1 to 4, **characterized in that** the membrane supporting element (7) is connected with a fastening ring (10) via a web (9).

6. A valve assembly according to any one of claims 1 to 5, **characterized in that** the drinking mouthpiece (1) is constructed so as to be substantially oval in top view.

7. A valve assembly according to claim 6 and 5, **characterized in that** the web (9) for fastening the membrane supporting element (7) is constructed in a plate-shaped manner with the plane defined by the plate-shaped web (9) extending in the direction of the longer axis of the drinking mouthpiece (1) in top view.

8. A valve assembly according to any one of claims 1 to 7, **characterized in that** the membrane (4) comprises several valve openings (5) arranged along a circular line.

9. A valve assembly according to any one of claims 1 to 8, **characterized in that** the membrane supporting element (7) comprises a substantially central valve opening (15).

10. A valve assembly according to any one of claims 1 to 9, **characterized in that** the mouthpiece (1), extends as a drinking spout beyond the membrane (4), whereby an elevated drinking spout edge (17) is formed as a membrane protection and spacer element.

11. A valve assembly according to any one of claims 1 to 10, **characterized in that** the drinking mouthpiece (1) consists of an elastic material, in particular a thermoplastic elastomer (TPE).

12. A valve assembly according to any one of claims 1 to 11, **characterized in that** the membrane supporting element (7) consists of polypropylene (PP).

13. A drinking mouthpiece (1) for a liquid container, with a valve assembly (3) according to any one of claims 1 to 10 which is able to be arranged on a lid (2) with an opening for the passage of liquid.

14. A drinking mouthpiece according to claim 13, **characterized in that** the soft drinking mouthpiece (1), preferably consisting of a thermoplastic elastomer (TPE), is produced by a multi-component injection molding process in one piece with the hard lid (2), preferably consisting of polypropylene (PP).

15. A drinking mouthpiece according to claim 13 or 14, wherein the lid (2) has an air valve (13) having an annular membrane, the air valve having at least one air passage opening (19), **characterized in that** a reception element (21) with a peripheral groove (24) that is open towards the inner side of the lid is fastened to the inner side of the lid which reception element (21) has at least one air entry opening (20) communicating with the air passage opening (19) of the lid (2) which opens out in the groove (24), wherein a ring (11) is insertable or inserted in the groove (24) and the air entry opening (20) is sealed at equal pressures on both sides of the air entry opening (20) and at an overpressure on the inner side of the lid, due to the prestressing of at least one groove wall (26) which is constructed as an annular membrane, and the air entry opening (20) is exposed at an underpressure on the inner side of the lid.

16. A drinking mouthpiece according to claim 15, **characterized in that** the end region (28) of the ring (11) facing the air entry opening (20) of the reception element (21) in the inserted position of the ring (11) is constructed so as to be substantially conical in cross section.

17. A drinking mouthpiece according to claim 15 or 16, **characterized in that** the end region (28) of the ring (11) facing the air entry opening (20) of the reception element (21) in the inserted position of the ring (11) has at least one recess (29).

18. A drinking mouthpiece according to any one of claims 15 to 17, **characterized in that** the ring (11) is fixable or fixed in the reception element (21) by means of a snap connection.

19. A drinking mouthpiece according to claim 18, **characterized in that** the ring (11) has on its outer side a circumferential bead (25) for snapping into the groove (24) of the reception element (21).

20. A drinking mouthpiece according to any one of claims 15 to 19, **characterized in that** the inner groove wall (26) is constructed as an annular membrane.

21. A drinking mouthpiece according to any one of claims 15 to 20, **characterized in that** the annular membrane (26) has at least one thin spot (27) to fix the prestressing of the annular membrane.

22. A drinking mouthpiece according to any one of claims 15 to 21, **characterized in that** the fastening ring (10) extending in the direction of the lid opening (2') is connected with the ring (11) via an inwardly extending connection flange (12).

23. A drinking mouthpiece according to claim 22, **characterized in that** at least one ventilation opening (30) is provided in the connection flange (12).

24. A drinking mouthpiece according to claim 23, **characterized in that** the ventilation opening (30) of the connection flange (29), in the inserted position of the ring (11), is arranged adjacent to the inner groove wall (26) designed as an annular membrane.

## Revendications

1. Agencement de clapet (3) pour un embout buccal pour boire (1) sensiblement élastique d'un récipient de liquide, comprenant une membrane (4) flexible, qui présente au moins une ouverture de clapet (5), et un élément de support de membrane (7) sensiblement rigide, qui présente au moins une ouverture de clapet (15), la membrane (4) reposant sur l'élément de support de membrane (7) lorsque l'agencement de clapet (3) est dans une position de fermeture, et l'ouverture de clapet (5) de la membrane (4) et l'ouverture de clapet (5) de l'élément de support de membrane (7) étant recouvertes de façon étanche respectivement par l'élément de support de membrane (7) et par la membrane (4), et la membrane (4) étant incurvée vers l'intérieur dans la position de fermeture, **caractérisé en ce que**, en cas d'application de pression par l'extérieur sur l'embout buccal pour boire (1) ou par l'application d'une dépression sur le côté, opposé à l'élément de support de membrane (7), de la membrane (4), la membrane (4) est présente dans une position ouverte occupée brusquement et incurvée vers l'extérieur, dans laquelle les ouvertures de clapet (5, 15) de la membrane (4) et de l'élément de support de membrane (7) sont libérées.

2. Agencement de clapet selon la revendication 1, **caractérisé en ce que** la membrane (4) dans sa position de fermeture et sa position ouverte est à chaque fois sensiblement conique.

3. Agencement de clapet selon la revendication 1 ou 2, **caractérisé en ce que** l'élément de support de membrane (7) présente une surface d'assise de clapet (8) correspondant sensiblement à la forme incurvée vers l'intérieur de la membrane (4) dans sa position de fermeture.

4. Agencement de clapet selon l'une quelconque des revendications 1 à 3, **caractérisé en ce que** l'embout buccal pour boire (1) présente une rainure d'encliquetage (6) pour le logement de l'élément de support de membrane (7) conçu comme corps d'encliquetage.

5. Agencement de clapet selon l'une quelconque des revendications 1 à 4, **caractérisé en ce que** l'élément de support de membrane (7) est relié au moyen d'une barrette (9) à une bague de fixation (10).

6. Agencement de clapet selon l'une quelconque des revendications 1 à 5, **caractérisé en ce que** l'embout buccal pour boire (1) est conçu de façon sensiblement ovale en vue de dessus.

7. Agencement de clapet selon les revendications 6 et 5, **caractérisé en ce que** la barrette (9) pour la fixation de l'élément de support de membrane (7) est conçue en forme de plaque, le plan défini par la barrette (9) en forme de plaque s'étendant en vue de dessus en direction de l'axe plus long de l'embout buccal pour boire (1).

8. Agencement de clapet selon l'une quelconque des revendications 1 à 7, **caractérisé en ce que** la membrane (4) présente plusieurs ouvertures de clapets (5) disposées le long d'une ligne circulaire.

9. Agencement de clapet selon l'une quelconque des revendications 1 à 8, **caractérisé en ce que** l'élément de support de membrane (7) présente une ouverture de clapet (15) sensiblement centrale.

10. Agencement de clapet selon l'une quelconque des revendications 1 à 9, **caractérisé en ce que** l'embout buccal (1) s'étend sous forme de bec pour boire au-delà de la membrane (4), un bord de bec pour boire (17) surélevé étant formé comme protection de membrane et élément d'espacement.

11. Agencement de clapet selon l'une quelconque des revendications 1 à 10, **caractérisé en ce que** l'embout buccal pour boire (4) est à base d'un matériau élastique, en particulier un élastomère thermoplastique (TPE).

12. Agencement de clapet selon l'une quelconque des revendications 1 à 11, **caractérisé en ce que** l'élément de support de membrane (7) est à base de polypropylène (PP).

13. Embout buccal pour boire (1) pour un récipient de liquide, comprenant un agencement de clapet (3) selon l'une quelconque des revendications 1 à 10, qui peut être disposé sur un couvercle (2) avec une ouverture (10) pour le passage de liquide.

14. Embout buccal pour boire selon la revendication 13, l'embout buccal pour boire (1) souple, de préférence à base d'un élastomère thermoplastique (TPE), étant **caractérisé en ce qu'**il est fabriqué d'une seule pièce dans un procédé de moulage par injection à plusieurs composants avec le couvercle (2) dur, de préférence à base de polypropylène (PP).

15. Embout buccal pour boire selon la revendication 13 ou 14, le couvercle (2) présentant un clapet à air (13) présentant une membrane annulaire avec au moins une ouverture de passage d'air (19), **caractérisé en ce qu'**un élément de logement (21) avec une rainure (24) périphérique, ouverte sur le côté intérieur du couvercle, est fixé sur le côté intérieur du couvercle, lequel élément de logement (21) présente au moins une ouverture d'rentrée d'air (20) en liaison avec l'ouverture de passage d'air (19) du couvercle (2) qui débouche dans la rainure (24), une bague (11) pouvant être insérée ou étant insérée dans la rainure (24), et l'ouverture d'entrée d'air (20) étant rendue étanche par la pré-tension d'au moins une paroi de rainure (26), qui est conçue sous forme de membrane annulaire, avec des pressions identiques des deux côtés de l'ouverture d'entrée d'air (20) et avec une surpression sur le côté intérieur du couvercle, et l'ouverture d'entrée d'air (20) étant libérée dans le cas d'une dépression sur le côté intérieur du couvercle.

16. Embout buccal pour boire selon la revendication 15, **caractérisé en ce que** la zone d'extrémité (28) de la bague (11), qui est tournée vers l'ouverture d'entrée d'air (20) de l'élément de logement (21) dans la position insérée de la bague (11), est conçue sensiblement conique en coupe transversale.

17. Embout buccal pour boire selon la revendication 15 ou 16, **caractérisé en ce que** la zone d'extrémité (28) de la bague (25), qui est tournée vers l'ouverture d'entrée d'air (20) de l'élément de logement (21) dans la position insérée de la bague (11), présente au moins un évidement (29).

18. Embout buccal pour boire selon l'une quelconque des revendications 15 à 17, **caractérisé en ce que** la bague (11) peut être fixée ou est fixée dans l'élément de logement (21) au moyen d'une liaison à encliquetage.

19. Embout buccal pour boire selon la revendication 18, **caractérisé en ce que** la bague (11) présente sur son côté extérieur un renflement (25) périphérique pour l'encliquetage dans la rainure (24) de l'élément de logement (21).

20. Embout buccal pour boire selon l'une quelconque des revendications 15 à 19, **caractérisé en ce que** la paroi de rainure (26) intérieure est conçue sous forme de membrane annulaire.

21. Embout buccal pour boire selon l'une quelconque des revendications 15 à 20, **caractérisé en ce que** la membrane annulaire (26) présente au moins un endroit mince (27) pour la spécification de la pré-tension de la membrane annulaire.

22. Embout buccal pour boire selon l'une quelconque des revendications 15 à 21, **caractérisé en ce que** la bague de fixation (10), qui s'étend en direction de l'ouverture de couvercle (2'), est reliée à la bague (11) au moyen d'une bride de liaison (12) s'étendant vers l'intérieur.

23. Embout buccal pour boire selon la revendication 22, **caractérisé en ce qu'**au moins une ouverture d'aération (30) est prévue dans la bride de liaison (12).

24. Embout buccal pour boire selon la revendication 23, **caractérisé en ce que** l'ouverture d'aération (30) de la bride de liaison (29) est disposée à proximité de la paroi de rainure (26) intérieure, conçue sous forme de membrane annulaire, dans la position insérée de la bague (11).
